Europäisches Patentamt

European Patent Office

Office européen des brevets

(19)

(11) Numéro de publication: **0 118 156**
**B1**

(12) # FASCICULE DE BREVET EUROPÉEN

(45) Date de publication du fascicule du brevet:
15.10.86

(51) Int. Cl.⁴: **H 04 L 27/06**

(21) Numéro de dépôt: **84200288.3**

(22) Date de dépôt: **01.03.84**

(54) **Dispositif de récupération de la porteuse d'un signal d'entrée modulé par sauts d'amplitude et par sauts de phase.**

(30) Priorité: **07.03.83 FR 8303688**

(43) Date de publication de la demande:
**12.09.84 Bulletin 84/37**

(45) Mention de la délivrance du brevet:
**15.10.86 Bulletin 86/42**

(84) Etats contractants désignés:
**BE CH DE FR GB IT LI NL SE**

(56) Documents cité:
**DE-A-3 030 145**
**US-A-3 970 946**
**US-A-4 057 762**

(73) Titulaire: **TELECOMMUNICATIONS RADIOELECTRIQUES ET TELEPHONIQUES T.R.T., 88, rue Brillat Savarin, F-75013 Paris (FR)**

(72) Inventeur: **Bonnerot, Georges, SOCIETE CIVILE S.P.I.D. 209 rue de l'Université, F-75007 Paris (FR)**
Inventeur: **Daout, Michel, SOCIETE CIVILE S.P.I.D. 209 rue de l'Université, F-75007 Paris (FR)**

(74) Mandataire: **Chaffraix, Jean, Société Civile S.P.I.D. 209, rue de l'Université, F-75007 Paris (FR)**

## Description

L'invention concerne un dispositif de récupération de la porteuse d'un signal d'entrée modulé par sauts d'amplitude et par sauts de phase (notamment modulation MAQ) pourvu d'un oscillateur à commande de fréquence pour produire ladite porteuse, d'un détecteur à quadrature pour fournir des signaux représentant l'amplitude du signal d'entrée projetée sur deux composantes P et Q en quadrature du signal fourni par ledit oscillateur et pour déterminer sinsi les états de modulation du signal d'entrée et de moyens de correction pour former, à partir d'un circuit de détermination de zones dans le plan des composantes P et Q, un signal de correction pour ladite commande de fréquence dudit oscillateur.

Un tel dispositif est décrit dans la demande de brevet français n° 2 466 145 déposée le 11 août 1980. Dans ce dispositif connu, le signal de correction est élaboré pour tous les états du signal d'entrée considérés avec la même importance quelle que soit la zone dans laquelle il se trouve. Or si le signal d'entrée est transmis par un canal subissant le phénomène dit "d'évanouissement sélectif", la position des états par rapport aux composantes en quadrature n'est plus celle des points idéaux mais dépend de la succession des états transmis. L'incertitude de ces points est d'autant plus importante que le phénomène d'évanouissement sélectif est prononcé. Il peut même arriver que les domaines d'incertitudes deviennent adjacents. Dans ce cas, le dispositif connu fonctionne mal car les états pour lesquels l'amplitude du signal est faible sont générateurs de bruits et entachent d'erreurs importantes le signal de correction.

L'invention propose un dispositif de récupération de porteuse du genre mentionné dans le préambule qui présente un fonctionnement tout aussi satisfaisant tant en présence d'évanouissement sélectif qu'en son absence.

Pour cela, un tel dispositif de récupération est remarquable en ce que les moyens de correction comportent un circuit de pondération la sortie duquel apparaît le signal de correction dépendant selon des poids variables de différentes zônes définies par le circuit de détermination de zones.

Un avantage apporte par l'invention est qu'en choisissant convenablement les différents poids du circuit de pondération, il est possible d'éviter le problème de faux accrochages, ce qui peut être décelé par l'examen de la courbe dite courbe en "S" (on se reportera à ce sujet a l'article de A. LECLERT et P. VANDAMME du rapport GLOBECOM'82 intitulé "Universal carrier recovery loop for QASK et PSK signal sets").

La description suivante faite en regard des dessins annexés, le tout donne à titre d'exemple non limitatif, fera bien comprendre comment l'invention peut être réalisée.

La figure 1 représente un dispositif de récupération de la porteuse d'un signal modulé en modulation MAQ16, dispositif réalisé conformément à l'invention.

La figure 2 montre la répartition des états de modulation dans le plan P, Q.

La figure 3 montre la formation des zones.

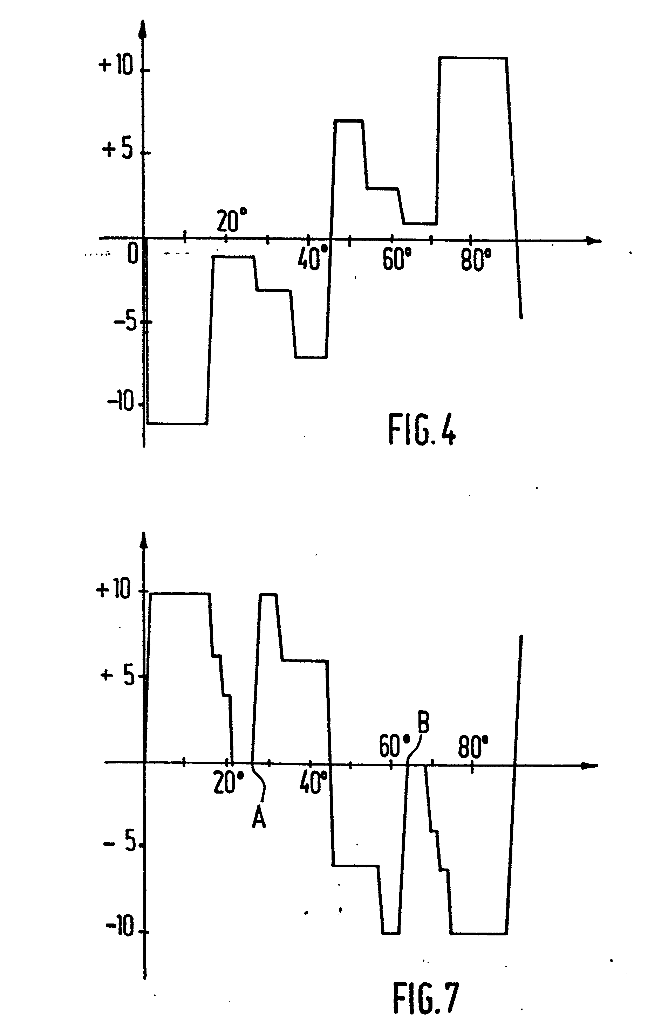

La figure 4 montre la courbe en "S" du dispositif de la figure 1, c'est-à-dire la caractéristique de comparateur de phase que présente ce dispositif.

La figure 5 montre une autre répartition des zones.

La figure 6 montre un autre dispositif de récupération de porteuse conforme à l'invention.

La figure 7 montre la courbe en "S" du dispositif montré à la figure 6.

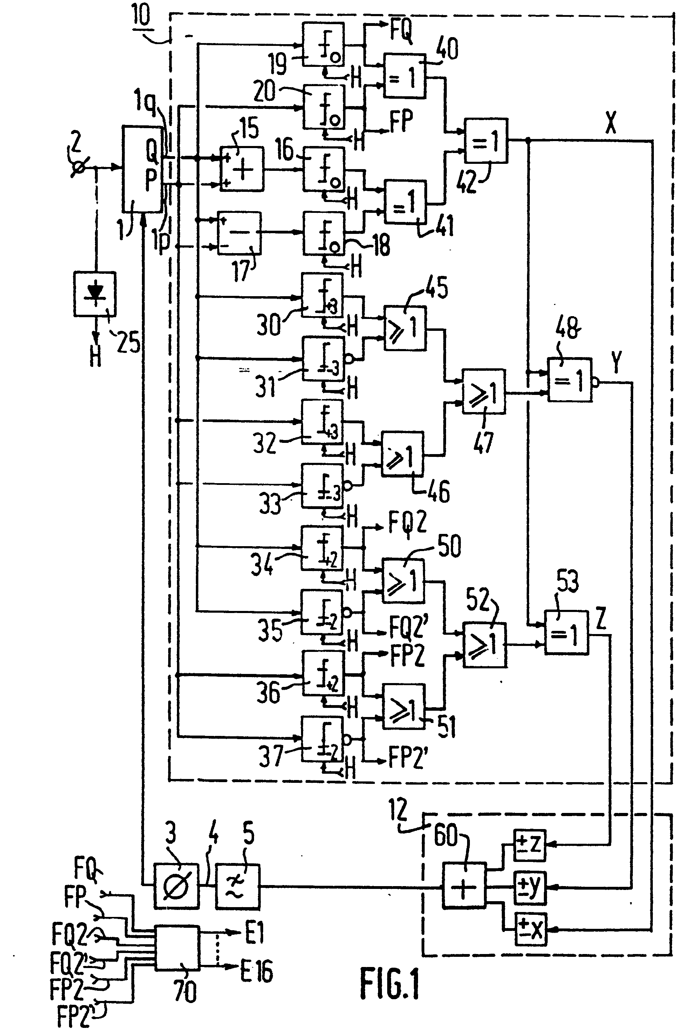

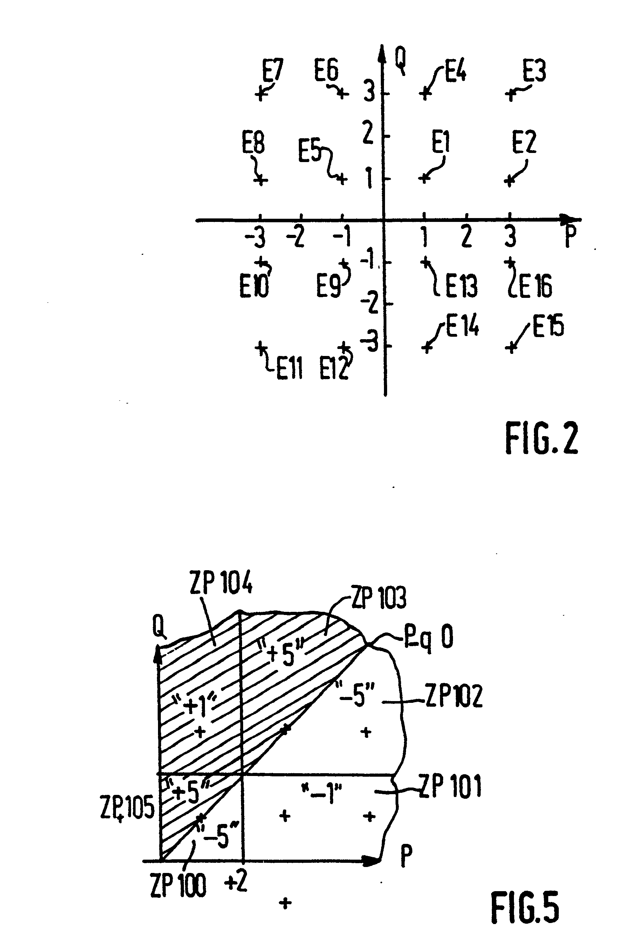

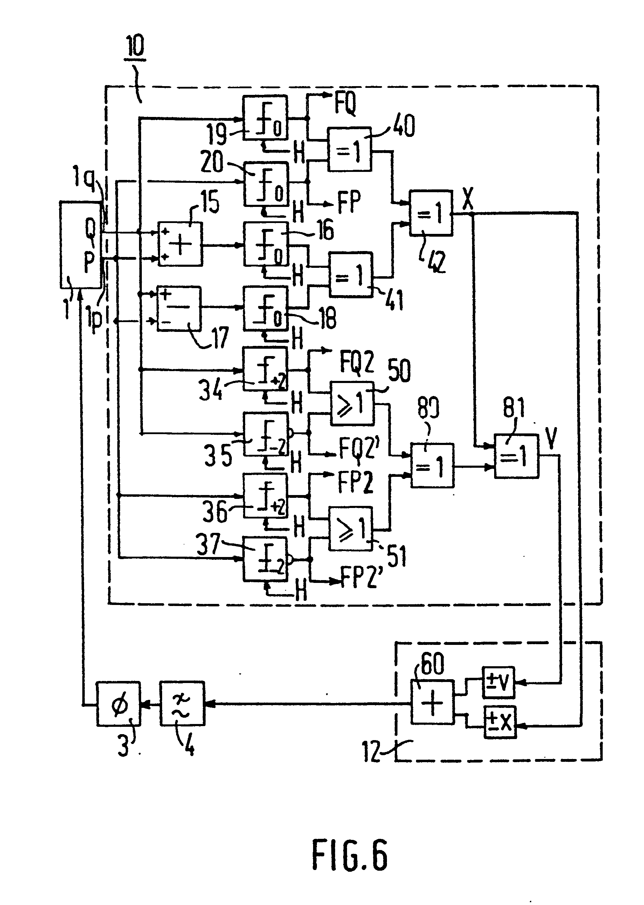

A la figure 1 où est montré un dispositif de récupération de porteuse conforme à l'invention, la référence 1 indique un détecteur à quadrature qui fournit des signaux sur des fils 1p et 1q à partir desquels on détermine tous les états d'un signal d'entrée appliqué à la borne 2; ces signaux disponibles sur des fils 1p et 1q sont la projection de l'amplitude du signal d'entrée sur les composants P et Q en quadrature d'un signal fourni par un oscillateur 3 muni d'une commade de fréquence 4. La figure 2 représente la configuration de ces états lorsque l'oscillateur 3 est considéré comme synchronisé. Dans cet exemple décrit la modulation du signal d'entrée envisagée est la modulation MAQ16 c'est-à-dire une modulation à 16 états; ces états sont repérés sur la figure 2 par E1, E2, E3,..., E16; l'état E1 est caractérisé par des signaux d'amplitude "1" rapportée sur les composantes P et Q, l'état E3 par des signaux d'amplitude "3" rapportée sur les composantes P et Q, l'état E2 par des signaux d'amplitudes "3" et "1" rapportées respectivement sur les composantes P et Q et l'état E4 par des signaux d'amplitudes "1" et "3" rapportées respectivement sur les composantes P et Q. Les états E5, E6, E7 et E8 occupent des positions symétriques, par rapport à la composante Q aux états E1, E4, E3 et E2. Quant aux états E9, E10, E11, E12, E13, E14, E15 et E16 ils occupent des positions symétriques, par rapport à la composante P, aux états E5, E8, E7, E6, E1, E4, E3 et E2 respectivement.

Si, notamment, l'oscillateur n'est pas syncyronisé avec le signal d'entrée, les états n'occupent plus les positions idéales définies ci-dessus. Pour ramener ces états vers leurs positions initiales, on a prevu des moyens pour fournir un signal de correction à la commande de fréquence 4 via un filtre passe-bas intégrateur 5. Ces moyens comportent entre autres un circuit de détermination de zones 10 dans le plan des composantes P et Q et conformément à l'invention un circuit de ponderation 12 a la sortie duquel apparaît le signal de correction dépendant, selon des poids variables, de différentes zones définies par le circuit de détermination de zones.

Le circuit de détermination de zones 10 comprend un additionneur 15 dont les entrées sont connectées aux fils 1p et 1q et dont la sortie est connectée à un circuit de décision 16, un organe de soustraction 17 dont l'entrée (+) est connectée au fil 1q, dont l'entrée (-) est connectée au fil 1p et dont la sortie est connectée à un circuit de décision 18, un circuit de décision 19 dont l'entrée est connectée au fil 1q et un circuit de décision 20 dont l'entrée est connectée au fil 1p. Les circuits 16, 18, 19 et 20 fournissent un signal logique de valeur "1" lorsque le signal à leur entrée est supérieur à "0" et la valeur logique "0" si le signal ne l'est pas. Les valeurs logiques à la sortie apparaissent à la cadence d'apparition des différents états du signal d'état. Pour cela il est prévu, comme cela est connu, un générateur de cadencement 25 qui fournit des signaux H représentant cette cadence d'apparition et ces signaux H sont appliqués aux différents circuits de décision 16, 18, 19 et 20. D'autres circuits de décision sont prévus:

- le circuit 30 dont l'entrée est connectée au fil 1q fournit un signal "1" pour un signal d'entrée supérieur à "+3" et "0" autrement

- le circuit 31 dont l'entrée est connectée au fil 1q fournit un signal "1 pour un signal d'entrée inférieur à "-3" et "0" autrement

- le circuit 32 dont l'entrée est connectée au fil 1p fournit un signal "1" pour un signal d'entrée supérieur à "+3" et "0" autrement

- le circuit 33 dont l'entrée est connectée au fil 1p fournit un signal "1" pour un signal d'entrée inférieur à "-3" et "0" autrement

- le circuit 34 dont l'entrée est connectée au fil 1q fournit un signal "1" pour un signal d'entrée supérieur à "+2" et "0" autrement

- le circuit 35 dont l'entrée est connectée au fil 1q fournit un signal "1" pour un signal d'entrée inférieur à "-2" et "0" autrement

- le circuit 36 dont l'entrée est connectée au fil 1p fournit un signal "1" pour un signal d'entrée supérieur à "+2" et "0" autrement

- le circuit 37 dont l'entrée est connectée au fil 1p fournit un signal "1" pour un signal d'entrée inférieur à "-2" et "0" autrement.

Différents circuits logiques vont déterminer différentes zones à partir des signaux logiques fournis par ces circuits de décision.

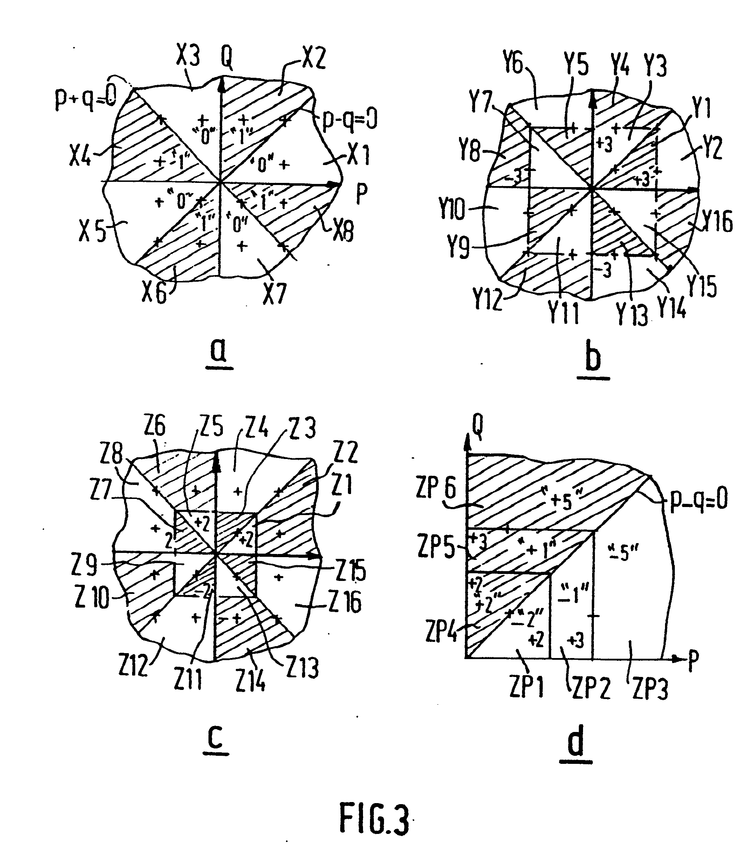

Les portes "OU EXCLUSIF" 40, 41 et 42 déterminent des zones X représentées par les référence X1 à X8 à la figure 3a. La porte 42 est munie de deux entrées dont une est connectée à la sortie de la porte 40 et l'autre, à la sortie de la porte 41. Les deux entrées de la porte 40 sont réunies à la sortie des deux circuits de décision 19 et 20 et les deux entrées de la porte 41 à la sortie des circuits 16 et 18. Le signal de sortie de la porte 42 fournit un signal de valeur logique "1" pour les zones hachurées X2, X4, X6 et X8 et la valeur "0" pour les autres zones X1, X3, X5 et X7. Ces différentes zones sont délimitées d'une part par les axes P et Q et d'autre part par les droites d'équation p + q = 0 et p - q = 0 où p est la valeur d'abscisse et q à valeur d'ordonnée.

Les portes "OU" 45, 46 et 47 et la porte "OU EXCLUSIF" 48 à sortie inverseuse coopérant avec la porte 42 déterminent des zones Y représentées par les références Y1 a Y16 à la figure 3b. La porte 48 est munie d'une première entrée qui est connectée à la sortie de la porte 42 et une deuxième a la sortie de la porte 47. La porte 47 est munie d'une première entrée qui est connectée à la sortie de la porte 45 et d'une deuxième à la sortie de la porte 46; les deux entrées de la porte 45 sont reliées respectivement aux sorties des circuits de décision 30 et 31 et celles de la porte 46 aux sorties des circuits 32 et 33. Le signal de sortie de la porte 48 fournit un signal de valeur logique "1" pour les zones hachurées Y1, Y4, Y5, Y8, Y9, Y12, Y13 et Y16 et la valeur "0" pour les zones restantes Y2, Y3, Y6, Y7, Y10, Y11, Y14 et Y15. Dans le plan P, Q ces zones sont délimitées d'une part par les axes P, Q et les droites p + q = 0 et p - q = 0 et d'autre part par un carré défini par les droites p = 3, p = -3, q = 3 et q = -3.

Les portes "OU" 50, 51 et 52 et la porte "OU EXCLUSIF" 53 coopérant avec la porte 42 déterminent des zones Z représentées par les références Z1 à Z16 à la figure 3c. La porte 53 est munie d'une première entrée qui est connectée à la sortie de la porte 42 et une deuxième à la sortie de la porte 52. La porte 52 est munie d'une première entrée qui est connectée à la sortie de la porte 50 et d'une deuxième à la sortie de la porte 51. Les deux entrées de la porte 50 sont reliées respectivement aux sorties des circuits de décision 34 et 35 et celles de la porte 51 aux sorties des circuits 36 et 37. Le signal de sortie de la porte 53 fournit un signal de valeur logique "1" pour les zones hachurées Z2, Z3, Z6, Z7, Z10, Z11, Z14 et Z15 et la valeir "0" pour les zones restantes Z1, Z4, Z5, Z8, Z9, Z12, Z13 et Z16. Dans le plan P, Q ces zones sont délimitées d'une part par les axes P, Q et les droites p + q = 0, p - q = 0 et d'autre part par un carre defini par les droites p = 2, p = -2, q = 2 et q = -2.

A partir des signaux de sortie des portes 42, 48 et 53 le circuit de pondération fournit un signal au filtre passe-bas intégrateur de la manière suivante:

- aux valeurs logiques "1" des signaux de sortie des portes 42, 48 et 53 on affecte respectivement des valeurs positives +x, +y, +z et aux valeurs "0", -x, -y, -z.

- ces valeurs affectées sont ensuite additionnées par un additionneur 60.

Si les valeurs de x, y, z sont telles que x = 3,5, y = 2 et z = 0,5 on définit alors des zones de pondération ZP1, ZP2, ZP3, ZP4, ZP5 et ZP6 représentées à la figure 3d qui ne montre que le premier quadrant du plan P, Q.

A la zone ZP1 délimitée par l'axe P, la droite p - q = 0 et la droite p = 2, la valeur "-2" est affectée.

A la zone ZP2 délimitée par l'axe P, la droite p - q = 0 et la droite p = 2 et la droite p = 3, la valeur "-1" est affectée.

A la zone ZP3 délimitée par l'axe P, la droite p - q = 0 et la droite p = 3, la valeur "-5" est affectée.

Aux zones ZP4, ZP5 et ZP6 symétriques, par rapport à la droite p - q = 0, aux zones ZP1, ZP2 et ZP3 les valeurs "+2", "+1" et "+5" sont respectivement affectées.

Pour les autres quadrants, la répartition des zones se détermine par des rotations successives du premier quadrant autour du point d'intersection des droites P et Q.

Il est intéressant de noter que les circuits de décision peuvent être utilisés pour fournir des signaux logiques correspondant aux différents états E1 à E18. Si on apelle FQ, FP, FQ2, FQ2', FP2 et FP2' les signaux à la sortie des circuits de decision 19, 20, 34, 35, 36 et 37 respectivement, un circuit de codage 70 fournit des signaux représentant les états E1 à E16. Le circuit de codage 70 effectue les opérations logiques suivantes.

$$E3 = FQ2. FP2$$
$$E7 = FQ2. FP2'$$
$$E11 = FQ2'. FP2'$$
$$E15 = FQ2'. FP2$$
$$E4 = FQ2. FP. \bar{E}3$$
$$E2 = FP2. FQ. \bar{E}3$$
$$E1 = FP. FQ. \bar{E}3. \bar{E}2. \bar{E}4$$
$$E8 = FP2'. FQ. \bar{E}7$$
$$E6 = \bar{F}\bar{P}. FQ2. \bar{E}7$$
$$E5 = \bar{F}\bar{P}. FQ. \bar{E}7. \bar{E}6. \bar{E}8$$
$$E12 = \bar{F}\bar{P}. FQ2'. \bar{E}11$$
$$E10 = FP2'. \bar{F}Q. \bar{E}11$$
$$E9 = \bar{F}\bar{P}. \bar{F}Q. \bar{E}11. \bar{E}10. \bar{E}12$$
$$E16 = FP2. \bar{F}Q. \bar{E}15$$
$$E14 = FQ2'. \bar{F}Q. \bar{E}15$$
$$E13 = FP. \bar{F}Q. \bar{E}15. \bar{E}14. \bar{E}16$$

Il est bien évident qu'à partir des circuits de décision et des circuits logiques, les états peuvent être déterminés directement par des dibits; par exemple, le premier dibit d'un état donne le numéro du quadrant, ceci est obtenu par les comparateurs 19 et 20 et le deuxième dibit donne la place du dibit dans le quadrant ceci est obtenu par les comparateurs 34 à 37 et les portes 50 et 51.

On a représenté à la figuré 4, la courbe en "S", ou caractéristique de phase du dispositif de récupération de porteuse de la figure 1. En ordonnées, on a porté les unités arbitraires tandis qu'en abscisses les angles sont repérés en degrés. On constate qu'avec ce dispositif de l'invention, on n'est pas confronté avec les problèmes de faux accrochages.

Au lieu des zones montrées à la figure 3d on peut prendre la configuration de zones ZP100 à ZP105 indiquées à la figure 5.

A la zone ZP100 délimitée par l'axe P, la droite p- q = 0 et la droite p = 2 la valeur "-5" est affectée.

A la zone ZP101 délimitée par l'axe P, la droite q = 2 et la droite p = 2 la valeur "-1" est affectée.

A la zone ZP102 délimitée par la droite p - q = 0 et la droite q = 2 la valeir "-5" est affectée.

Aux zones ZP103, ZP104 et ZP105 symétriques, par rapport à la droite p - q = 0, aux zones ZP102, ZP101 et ZP100 sont affectées respectivement les valeurs "+5", "+1" et "+5".

Pour les autres quadrants, la repartition des zones se déduit par des rotations successives des zones du premier quadrant.

Le dispositif montre en variante a la figure 6 réalise la configuration de zones de la figure 5. Les éléments communs avec ceux de la figure 1 portent les mêmes références. Ce dispositif est formé d'un circuit de détermination de zones 10 comportant les éléments 15, 16, 17, 18, 19, 20, 34, 35, 36, 37, 40, 41, 42, 50 et 51 déjà cités, une porte "OU EXCLUSIF" 80 dont les entrées sont reliées aux sorties des portes 50 et 51 et dont la sortie est reliée à l'entrée d'une autre porte "OU EXCLUSIF" 81, l'autre entrée de la porte 81 est reliée à la sortie de la porte 42. A la sortie de la porte 42 on a un signal qui détermine les zones X déjà citées et à la sortie de la porte 81 on a un signal qui determine des zones V et qui, combiné avec celui des X au moyen du circuit de pondération 12, permet d'obtenir la configuration de zones montrée à la figure 5. Pour cela, le circuit de pondération affecte la valeur $v = 2$ pour un signal de valeur logique "1" à la sortie de la porte 81 et la valeur $v = -2$ pour la valeur logique "0" et affecte la valeur $x = 3$ pour un signal de valeur logique "1" à la sortie de la porte 42 et la valeur $x = -3$ pour un signal de valeur logique "0".

Cependant la courbe "S" présente deux plages A et B où l'on peut théoriquement avoir des phénomènes de faux accrochages. En pratique, comme ces points sont situés sur l'axe des abscisses ces phénomènes ne se produisent pas.

**Revendications**

1. Dispositif de récupération de la porteuse d'un signal d'entrée modulé par sauts d'amplitude et par sauts de phase (notammet modulation MAQ) pourvu d'un oscillateur à commande de fréquence pour produire ladite porteuse, d'un détecteur à quadrature pour fournir des signaux représentant l'amplitude du signal d'entrée projetée sur deux composantes P et Q en quadrature du signal fourni par ledit oscillateur et pour déterminer ainsi les états de modulation du signal d'entrée et de moyens de correction pour former, à partir d'un circuit de détermination de zones dans le plan des composantes P et Q, un signal de correction pour ladite commande de frequence dudit oscillateur, caractérisé en ce que les moyens de correction comportent un circuit de pondération à la sortie duquel apparaît le signal de correction dépendant selon des poids variables de différentes zones définies par le circuit de détermination de zones.

2. Dispositif de récupération de porteuse selon la revendication 1, convenant pour une porteuse modulée selon seize états (MAQ16), caractérisé en ce que le circuit de détermination de zones détermine des zones: ZP1, ZP2, ZP3, ZP4 à ZP6 dans le premier quadrant.

- la zone ZP1 étant délimitée pratiquement par l'axe P, la droite p - q = 0 et la droite p = 2.

- La zone ZP2 étant délimitée pratiquement par l'axe P, la droite p - q = 0 et la droite p = 2 et la droite p = 3.

- La zone ZP3 étant délimitée pratiquement par l'axe P, la droite p - q = 0 et la droite p = 3.

- Les zones ZP4, ZP5 et ZP6 étant symétriques, par rapport à la droite p - q = 0, aux zones ZP1, ZP2 et ZP3.

Les zones dans les autres quadrants se déduisant par rotations successives de 90° par rapport au point d'intersection des axes P et Q des zones du premier quadrant et en ce que le circuit de pondération affecte:

- une valeur de l'ordre de "a" et "-a" aux zones ZP1 et ZP4,

- une valeur de l'ordre de "b" et "-b" aux zones ZF2 et ZP5,

- une valeur de l'ordre de "c" et "-c" aux zones ZF3 et ZP6,

où |a| = 2, |b| = 1 et |c| = 5, l'affectation pour les zones des autres quadrants, se déduisant aussi par ledite rotation.

3. Dispositif de récupération de porteuse selon la revendication 1, convenant pour une porteuse modulée selon seize états (MAQ16), caractérisé en ce que le circuit de détermination de zones détermine des zones ZP100 à ZP105 dans le premier quadrant:

- La zone ZP101 étant pratiquement délimitée par l'axe P, la droite q = 2 et la droite p = 2.

- La zone ZP102 étant pratiquement délimitée par la droite p - q = 0 et la droite q = 2.

- Les zones ZP103, ZP104 et ZP105 étant symétriques, par rapport à la droite p - q = 0.

Les zones des autres quadrats se déduisant par rotations successives de 90° par rapport au point d'intersection des axes P et Q des zones du premier quadrant et en ce que le circuit de pondération affecte:

- une valeur de l'ordre de "j" et "-j" aux zones ZP100 et ZP105.

- une valeur de l'ordre de "k" et "-k" aux zones ZP101 et ZP104.

- une valeur de l'ordre de "l" et "-l" aux zones ZP102 et ZP103.

où |j| = |l| = 5 et |k| = 1.

4. Dispositif de récupération de porteuse selon l'une des revendications 1 a 3 dans lequel le circuit de détermination de zones comporte des circuits de décision, caractérisé en ce qu'une partie au moins de ces circuits de décision est utilisée pour déterminer les états.

5. Dispositif de récupération de porteuse selon l'une des revendications 1 à 5, caractérisé en ce que les moyens de correction sont constitués à partir de circuits logiques.

**Claims**

1. A circuit for recovering the carrier of an input signal modulated by amplitude and phase steps (more specifically QAM), comprising said carrier, a quadrature detector for supplying signals representing the amplitude of said input signal projected on two quadrature components P and Q of the signal produced by said oscillator and for thus determining the modulation states of said input signal, and correction means for forming a correction signal for said frequency control of said oscillator on the basis of a circuit which determines zones in the plane of said quadrature components P and Q, characterized in that said correction means comprise a weighting circuit at whose output the correction signal appears in accordance with variable weights of the respective zones defined by the zone-determining circuit.

2. A carrier recovery circuit as claimed in Claim 1, arranged for a carrier modulated in 16 states (16 QAM), characterized in that said zone-determining circuit defines zones ZP1, ZP2, ZP3, ZP4 to ZP6 in the first quadrant:

- the zone ZP1 being delimited substantially by the axis P, the line p - q = 0 and the line p = 2,

- the zone ZP2 being delimited substantially by the axis P, the line p - q = 0 and the lines p = 2 and p = 3,

- the zone ZP3 being delimited substantially by the axis P, the line p - q = 0 and the line p = 3,

- the zones ZP4, ZP5 and ZP6 being symmetrical, relative to the line p - q = 0, to the zones ZP1, ZP2 and ZP3,

the zones in the other quadrants being derived by successive rotations of 90° relative to the point of intersection of the axis P and Q of the zones of the first quadrant and in that said weighting circuit allocates:

- a value of the order of "a" and "-a" to the zones ZP1 and P4, respectively,

- a value of the order of "b" and "-b" to the zones ZP2 and ZP5, respectively,

- a value of the order of "c" and "-c" to the zones ZP3 and ZP6, respectively,

where |a| = 2, |b| = 1 and |c| = 5, the allocation for the zones of the other quadrants being derived also by said rotations.

3. A carrier recovery circuit as claimed in Claim 1, arranged for a carrier modulated in 16 states (16 QAM), characterized in that said zone-determining circuit defines zones ZP100 to ZP105 in the first quadrant:

- the zone ZP100 being delimited substantially by the axis P, the line p - q = 0 and the line P = 2,

- the zone ZP101 being delimited substantially by the axis P, the line q = 2 and the line p = 2,

- the zone ZP102 being delimited substantially by the line p - q = 0 and the line q = 2,

- the zones ZP103, ZP104 and ZP105 being symmetrical, relative to the line P - q = 0,

the zones in the other quadrants being derived by successive rotations of 90° relative to the point of intersection of the axes P and Q of the zones of the first quadrant and in that said weighting circuit allocates:

- a value of the order of "j" and -"j" to the zones ZP100 and ZP105,
- a value of the order of "k" and "-k" to the zones ZP101 and ZP104,
- a value of the order of "l" and "-l" to the zones ZP102 and ZP103,

where $|j| = |l| = 5$ and $|k| = 1$.

4. A carrier recovery circuit as claimed in one of the Claims 1 to 3, in which said zone-determining circuit comprises decision circuits, characterized in that at least a part of these decision circuits is used for determining the states.

5. A carrier recovery circuit as claimed in anyone of the Claims 1 to 5, characterized in that said correction means are constituted on the basis of logic circuits.

## Patentansprüche

1. Schaltungsanordnung zur Trägerrückgewinnung eines in Amplituden- und Phasenstufen modulierten Eingangssignals (insbesondere eines QAM-signals) mit einem Oszillator mit Frequenzsteuerung zum Erzeugen des genannten Trägers, mit einen Quadraturdetektor zum Liefern von Signalen, welche für die auf zwei Quadraturkomponenten P und Q des von dem genannten Oszillator gelieferten Signals projizierte Amplitude des Eingangssignals repräsentativ sind, und zum auf diese Weise Bestimmen der Modulationszustande des Eingangssignals, und mit Korrekturnitteln zum Bilden eines Korrektursignals für die genannte Frequenzsteuerung des genannten Oszillators auf Basis der Ausgangssignale einer Schaltung zum Bestimmen von Zonen in der Ebene der Komponenten P und Q, dadurch gekennzeichnet, dass die Korrekturmittel eine Wägungsschaltung enthalten, an deren Ausgang das Korrektursignal erscheint, das entsprechend veränderlichen Gewichten von den jeweiligen durch die Zonenbestimmende Schaltung definierten Zonen abhängig ist.

2. Schaltungsanordnung zur Trägerrückgewinnung nach Anspruch 1 für einen mit 16 Zuständen modulierten Träger (QAM 16), dadurch gekennzeichnet, dass die Zonenbestimmende Schaltung Zonen ZP1, ZP2, ZP3 und ZP4, ZP5, ZP6 in dem ersten Quadranten bestimmt:

- wobei die Zone ZP1 durch die Achse P, die Gerade p - q = 0 und die Gerade p = 2 praktisch begrenzt ist;
- wobei die Zone ZP2 durch die Achse P, die Gerade p - q = 0, die Gerade P = 2 und die Gerade p = 3 praktisch begrenzt ist;
- wobei die Zone ZP3 durch die Achse P, die Gerade p - q = 0 und die Gerade p = 3 praktisch begrenzt ist;

- wobei die Zonen ZP4, ZP5 und ZP6 bezüglich der Gerade p - q = 0 zu den Zonen ZP1, ZP2 und ZP3 symmetrisch sind;

wobei die Zonen in den anderen Quadranten aus den Zonen des ersten Quadranten durch aufeinanderfolgende 90°-Drehungen um den Schnittpunkt der Achsen P und Q abgeleitet werden und dass die Wägungsschaltung:

- den Zonen ZP1 und ZP4 einen Wert der Grössenordnung "a" bzw. "-a" zuordnet;
- den Zonen ZP2 und ZP5 einen Wert der Grössenordnung "b" bzw. "-b" zuordnet;
- den Zonen ZP3 und ZP6 einen Wert der Grössenordnung "c" bzw. "-c" zuordnet;

mit $|a| = 2$, $|b| = 1$ und $|c| = 5$, und wobei das Zuordnen für die Zonen der anderen Quadranten ebenfalls durch die genannte Drehung abgeleitet wird.

3. Schaltungsanordnung zur Trägerrückgewinnung nach Anspruch 1 für einen mit 16 Zuständen modulierten Träger (QAM 16), dadurch gekennzeichnet, dass die Zonenbestinnende Schaltung Zonen ZP100 bis einschliesslich ZP105 in den ersten Quadranten bestimmt:

- wobei die Zone ZP100 durch die Achse P, die Gerade p - q = 0 und die Gerade p = 2 praktisch begrenzt ist;
- wobei die Zone ZP101 durch die Achse P, die Gerade q = 2 und die Gerade p = 2 praktisch begrenzt ist;
- wobei die Zone ZP102 durch die Gerade p - q = 0 und die Gerade q = 2 praktisch begrenzt ist;
- wobei die Zonen ZP103, ZP104 und ZP105 bezüglich der Gerade p - q = 0 symmetrisch sind;

wobei die Zonen der anderen Quadranten aus den Zonen des ersten Quadranten durch aufeinanderfolgende 90°-Drehungen um den Schnittpunkt der Achsen P und Q angeleitet werden und dass die Wägungsschaltung:

- den Zonen ZP100 und ZP105 einen Wert der Grössenordnung "j" bzw. "-j" zuordnet;
- den Zonen ZP101 und ZP104 einen Wert der Grössenordnung "k" bzw. "-k" zuordnet;
- den Zonen ZP102 und ZP103 einen Wert der Grössenordnung "l" bzw. "-l" zuordnet,

mit $|j| = |l| = 5$ und $|k| = 1$.

4. Schaltungsanordnung zur Trägerrückgewinnung nach einem der Ansprüche 1 bis 3, wobei die Schaltung zum Bestimnen der Zonen mit Entscheidungsschaltungen versehen ist, dadurch gekennzeichnet, dass mindestens ein Teil dieser Entscheidungsschaltungen zum Bestimmen der Zustände verwendet wird.

5. Schaltungsanordnung zur Trägerrückgewinnung nach einem der Ansprüche 1 bis 5, dadurch gekennzeichnet, dass die Korrekturmittel durch logische Schaltungen gebildet werden.

FIG.1

FIG.2

FIG.5

FIG.6

FIG.3

FIG.4

FIG.7